(19) Europäisches Patentamt
European Patent Office
Office européen des brevets

(11) **EP 1 953 204 B1**

(12) **EUROPEAN PATENT SPECIFICATION**

(45) Date of publication and mention of the grant of the patent:
**06.04.2011 Bulletin 2011/14**

(51) Int Cl.:
***C09J 7/00*** *(2006.01)*

(21) Application number: **08008149.0**

(22) Date of filing: **30.12.2005**

(54) **Adhesive tape and substrate for adhesive tape**

Klebeband und Substrat für ein Klebeband

Bande adhésive et substrat pour bande adhésive

(84) Designated Contracting States:
**BE DE FR GB IT NL**

(30) Priority: **11.01.2005 JP 2005004535**

(43) Date of publication of application:
**06.08.2008 Bulletin 2008/32**

(62) Document number(s) of the earlier application(s) in accordance with Art. 76 EPC:
**05113092.0 / 1 679 355**

(73) Proprietor: **NITTO DENKO CORPORATION**
**Ibaraki-shi,**
**Osaka 567-8680 (JP)**

(72) Inventors:
• **Ishiguro, Shigeki**
**Ibaraki-shi**
**Osaka 567-8680 (JP)**
• **Shirai, Masato**
**Ibaraki-shi**
**Osaka 567-8680 (JP)**
• **Nakagawa, Yoshio**
**Ibaraki-shi**
**Osaka 567-8680 (JP)**

(74) Representative: **von Kreisler Selting Werner**
**Deichmannhaus am Dom**
**Bahnhofsvorplatz 1**
**50667 Köln (DE)**

(56) References cited:
**WO-A-97/05206        US-A- 4 238 587**
**US-A- 4 693 935**

• **DATABASE WPI Week 199518 Derwent Publications Ltd., London, GB; AN 1995-136568 XP002483752 & JP 07 061126 A (MITSUBISHI PAPER MILLS LTD) 7 March 1995 (1995-03-07)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD OF THE INVENTION

The present invention relates to a substrate for an adhesive tape, which is used for an adhesive tape.

### BACKGROUND OF THE INVENTION

Conventionally, for electric insulation and binding use, adhesive tapes comprising a soft polyvinyl chloride (PVC) film as a substrate for adhesive tape (hereinafter to be referred to as "PVC tape") have been generally used. PVC tapes are highly flexible (i.e., low initial elastic modulus) and show fine followability to irregularities in connection parts when, for example, used for insulation treatment of connection parts of electric cables. When used for binding several electric cables and the like, the tape needs to be wound tight to secure electric cables, and is often wound while stretching approximately 100%. Since the slope of strength relative to elongation is steep in a range near 100% elongation, PVC tapes show high tightening power. In addition, since PVC tapes show high strength at break, they do not break even when tightly wound. However, many of the materials used for soft PVC films are suspected to be environmentally burdening. For example, PVC has been reported to possibly generate dioxin during incineration at low temperature. During combustion, moreover, PVC produces a large amount of toxic hydrogen chloride gas and carbon monoxide. Furthermore, some of the plasticizers added to impart flexibility have been reported to be suspected endocrine disrupters. In addition, lead and cadmium compounds may be used as stabilizers, and the both may cause some adverse influence on the human body.

Under the circumstances, a number of substitutes for a substrate for adhesive tape have been studied, which use a relatively soft olefin polymer instead of soft PVC (JP-A-2003-178628). However, since olefin polymers generally contain a crystal component, a yield point exists near 50% elongation, where the strength once decreases, in an elongation test. The presence of a yield point makes stable winding unattainable and decreases the binding force after winding. Consequently, olefin polymers are unsuitable for binding use. Moreover, olefin polymers generally show higher strength at break, and high elongation. As a result, in use where what is called hand-cuttability (cutting tape with hands without using a cutting tool) is required after use of an adhesive tape, the broken-out section becomes completely stretched after cutting, which is inconvenient for a terminal treatment. Therefore, an adhesive tape comprising an olefin polymer as a substrate for adhesive tape cannot meet the bindability and hand-cuttability characteristic of PVC tapes, and particularly, due to the presence of a yield point, such adhesive tape is fatal as a substitute for a PVC tape.

With the purpose of improving the flexibility and hand-cuttability, an adhesive tape having a substrate made of a resin composition comprising an olefin polymer and a metal hydroxide treated with a silane coupling agent has been proposed (JP-A-2004-115714). While the adhesive tape described in JP-A-2004-115714 could eliminate the yield point, as compared to PVC tape, there is a room for improvement in the elastic deformation at near 100% elongation and strength at break. When an inorganometallic compound contained a (heavy) metallic ion as impurity, moreover, the life of heat resistance was sometimes shortened.

US Patent No. 4,238,587 relates to thermal initiators for the polymerization of cationically polymerizable materials and discloses heat curable compositions comprising a cationically polymerizable organic material, a diaryliodonium salt and a member selected from a copper chelate and a mixture of a copper chelate and a reducing agent.

US Patent No. 4,639,935 describes pressure sensitive adhesive (PSA) compositions comprising a copolymer having a vinyl polymeric backbone having grafted thereto polysiloxane moieties. The compositions may contain other ingredients such as tackifier and/or plasticizer.

JP-A-07061126 relates to heat-sensitive recording materials that can be used as label material, wherein, after separating the released side from the self-adhesive side, the release side represents a copy of the self-adhesive side. In particular, the materials comprise a heat-sensitive recording layer containing pre-dye and color developer, a release substrate, a release layer, an adhesive layer, adhesion substrate and a heat-sensitive recording layer containing a pre-dye and color developing agent.

WO-A-97/05206 discloses a pressure sensitive adhesive tape comprising a tape body coated on one side thereof with an adhesive. The tape body comprises the following components: a) from 40 to 85 wt. % of at least one copolymer of olefin with vinyl-or acrylic esters, b) from 0% to 20 wt. % of low density polyethylene, c) from 20 to 55 wt. % of inorganic filler and/or flame retardant consisting of any one of the following either alone or in combination: aluminum trihydrate, zinc borate, an organic polyphosphate, polyammonium phosphate or magnesium hydroxide, and d) from 0 to 5 wt. % of a silane coupling agent.

In addition, since olefin polymers contain hydrocarbon as a basic skeleton, they are generally poor in flame-retardancy. In contrast, PVC has flame-retardancy by itself, since it contains chlorine atom in a large amount. Therefore, PVC tape can have flame-retardancy of a self-extinguishing level (level naturally leading to extinction in the air after removal of seat of fire) even when a large amount of plasticizer is added. While various studies of a method of making olefin polymer flame-retardant have been conducted, for the olefin polymer to achieve effective flame-retardancy, an extremely large amount of a flame-retarder needs to be added.

Addition of an extremely large amount of a flame-retarder in an attempt to afford flame-retardancy comparable to that of a PVC tape results in degraded mechanical physical properties, since a substrate for adhesive tape is considerably thin, and an adhesive tape having flame-retardancy equivalent to that of a PVC tape is difficult to obtain. Accordingly, there is no report on a research that has achieved sufficient flame-retardancy by the addition of a small amount of a flame-retarder to an adhesive tape made of an olefin polymer as a constituent material. Furthermore, there is no report, either, on a flame-retardant adhesive tape free of a yield point, which contains a large amount of a flame-retarder.

## SUMMARY OF THE INVENTION

The present invention has been made in view of such situation, and aims at provision of an adhesive tape free of a yield point in a tensile test and having high strength, and bindability, hand-cuttability and long-term heat resistance as well as flame-retardancy, which are comparable to those of a PVC tape, even if it comprises an olefin polymer as a polymer component constituting the substrate for adhesive tape, and a substrate for adhesive tape, which is to be used for the adhesive tape.

The present inventors have conducted intensive studies in an attempt to solve the above-mentioned problems and found that an adhesive tape free of a yield point and having flexibility, high strength at break, long-term heat resistance and flame-retardancy, which is suitable for binding use, can be obtained by using, as a polymer component, an olefin polymer having a carbonylic oxygen atom in a molecular skeleton, which is combined with an metallic hydroxide treated with a silane coupling agent and a salicylic acid compound, and mixing given amounts thereof to form a substrate for adhesive tape, which resulted in the completion of the present invention.

Accordingly, the present invention is characterized by the following.

1. A substrate for an adhesive tape, which comprises an olefin polymer having a carbonylic oxygen atom in a molecular skeleton, a metallic hydroxide surface-treated with a silane coupling agent, and a salicylic acid compound, wherein

the content of said olefin polymer is 10-70 % by weight relative to the whole weight of the polymer components constituting the substrate,

the content of said metallic hydroxide surface-treated with a silane coupling agent is 80-200 parts by weight relative to 100 parts by weight of the polymer components constituting the substrate, and

the content of said salicylic acid compound is 0.05-10.0 parts by weight relative to 100 parts by weight of the polymer components constituting the substrate.

2. The substrate of item 1, which has an oxygen index of not less than 24.

3. The substrate of item 1 or 2, which is free of a crosslinking treatment with ionizing radiation and/or a crosslinking agent.

4. An adhesive tape comprising an adhesive layer on at least one surface of the substrate as defined in any of items 1, 2 or 3.

5. The adhesive tape of item 4, wherein the heat deformation rate of the adhesive tape at 100°C is not more than 65%.

## BRIEF DESCRIPTION OF THE DRAWINGS

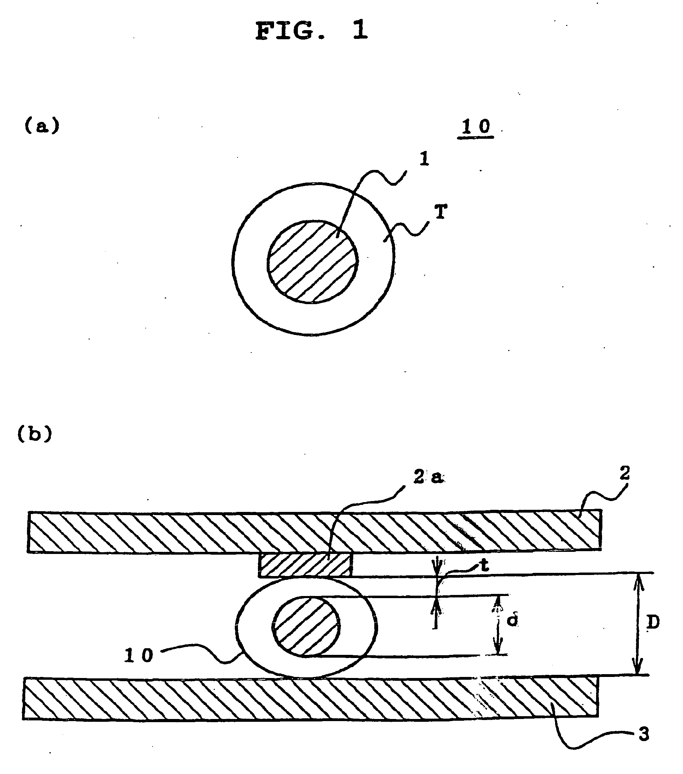

Fig. 1 explains the method of a heat deformation rate evaluation test of an adhesive tape, wherein Fig. 1(a) is a side view of the test form and Fig. 1(b) is a side view of the test device. In the Figure, each symbol means the following.
1 round rod, 2 pressure board, 3 parallel board, 10 test form, T adhesive tape

## EFFECT OF THE INVENTION

According to the present invention, an adhesive tape free of a yield point in a tensile test, which has high strength, and bindability, hand-cuttability and long-term heat resistance as well as flame-retardancy, which are comparable to those of a PVC tape, and a substrate for adhesive tape to be used for said adhesive tape can be provided. The adhesive tape of the present invention is useful for binding use.

**BEST MODE FOR CARRYING OUT THE INVENTION**

The present invention is explained in detail in the following by referring to a preferable embodiment.

The adhesive tape of the present invention characteristically has a substrate comprising a given amount each of an olefin polymer having a carbonylic oxygen atom in a molecular skeleton, a metallic hydroxide surface-treated with a silane coupling agent and a salicylic acid compound as essential components. Moreover, the adhesive tape of the present invention may contain a flame-retarder and/or flame-retardant auxiliary as necessary.

By adopting the above-mentioned constitution, the adhesive tape of the present invention is free of a yield point, and has flexibility, bindability and hand-cuttability and flame-retardancy, which are comparable to those of a PVC tape. As regards the flame-retardancy, the oxygen index can be set to not less than 24. It is defined that those having an oxygen index of 22-24 have a flame-retardancy of a self-extinguishing level (level of naturally leading to extinction in the air after removal of seat of fire). For general electric insulation use, the flame-retardancy of a self-extinguishing level is essentially required often. As used herein, the "oxygen index" refers to the minimum oxygen concentration necessary for a material in a gas mixture of oxygen and nitrogen to maintain the minimum combustion at a temperature of $23°C \pm 2°C$, where greater values mean higher flame-retardancy. The flexibility, bindability and hand-cuttability are expressed by numeral values as follows based on the initial elastic modulus, strength at break and elongation at break in a tensile test as indices.

The initial elastic modulus in a tensile test corresponds to the flexibility of adhesive tape. The initial elastic modulus of the adhesive tape of the present invention is 10-150 MPa, preferably 30-140 MPa, more preferably 50-130 MPa. When it is lower than 10 MPa, the substrate of the adhesive tape tends to be easily stretched and deformed during rewinding. When it is greater than 150 MPa, the followability to the irregularities tends to be degraded.

To achieve the bindability, the absence of a yield point and high strength at break are required. The presence or absence of a yield point can be determined by plotting a graph of the output data of a tensile test. The evaluation of the absence of a yield point requires, as essential conditions, no decrease in the strength and constant increase in the strength with increasing stretchability in the graph. The strength at break of the adhesive tape of the present invention is 6-30 MPa, preferably 8-27 MPa, more preferably 10-24 MPa. When it is lower than 6 MPa, the adhesive tape may be broken during winding. When it is greater than 30 MPa, the winding operation requires highly strong force, and the adhesive tape tends to resist cutting with hands after the completion of the operation.

To achieve the hand-cuttability, suitable elongation is necessary. The elongation at break of the adhesive tape of the present invention is 80-600%, preferably 100-400%, more preferably 120-350%. When it is lower than 80%, the adhesive tape may be easily broken during winding. When it is greater than 600%, the adhesive tape stretches too much when cutting the tape after the completion of winding, and the broken-out section becomes degraded, which tends to result in lower adhesiveness of the terminal.

Here, the initial elastic modulus, strength at break and elongation at break are measured by stretching a test piece taken from an adhesive tape, under an atmosphere of 23°C, 50% RH (relative humidity) using a tensile tester defined in JIS B 7721 or an equivalent tensile tester at distance between chucks 50 mm and tensile rate 300 mm/min.

PVC used for PVC tapes is a non-crystalline polymer, but shows high interaction between molecules. While the plasticizing temperature varies depending on the molecular weight and the amount of plasticizer, it is generally about 120°C. Therefore, the shape can be sufficiently maintained even at 100°C. PVC tapes are often used under high temperature conditions for connection of electric cables, binding in electric equipment, binding of electric cables near automobile engines and the like. Therefore, as a function of an adhesive tape, shape retention under the conditions of high temperature is highly important. To confirm the shape retention ability, a rather severe condition of 100°C was employed from the conventionally employed temperature conditions, and a heat deformation test was performed according to UL510 standard. The adhesive tape of the present invention shows a heat deformation rate at 100°C of not more than 65%, preferably not more than 50%, more preferably not more than 40%. Consequently, the adhesive tape of the present invention shows fine shape retention under the condition of 100°C during use.

The constituting materials of the adhesive tape of the present invention are explained in the following.

The substrate for the adhesive tape of the present invention is explained first. The substrate for the adhesive tape of the present invention comprises an olefin polymer having, as a polymer component, carbonylic oxygen atom (oxygen atom ascribed to carbonyl group) in a molecular skeleton. The olefin polymer is a component for mainly imparting an adhesive tape with flexibility and stretchability.

As the olefin polymer, a soft polyolefin resin having a carbonylic oxygen atom in a molecular skeleton is preferably used. As the soft polyolefin resin, an ethylene copolymer using a vinyl ester compound and/or $\alpha,\beta$-unsaturated carboxylic acid or a derivative thereof as a comonomer, or a metal salt (ionomer) thereof and the like can be mentioned, which generally have a melting point of not more than 100°C. In the present invention, the melting point refers to a value measured with a differential scanning calorimeter (DSC).

As the vinyl ester compound in the above-mentioned ethylene copolymer and a metal salt (ionomer) thereof, for example, saturated carboxylate of vinyl alcohol such as vinyl acetate and the like can be mentioned. As the $\alpha,\beta$-

unsaturated carboxylic acid or a derivative thereof, for example, unsaturated carboxylic acids and anhydrides thereof, such as acrylic acid, methacrylic acid, maleic acid, fumaric acid, maleic anhydride, itaconic anhydride and the like; unsaturated carboxylates such as methyl acrylate, methyl methacrylate, ethyl acrylate, ethyl methacrylate, propyl acrylate, propyl methacrylate, isopropyl acrylate, isopropyl methacrylate, n-butyl acrylate, n-butyl methacrylate, cyclohexyl acrylate, cyclohexyl methacrylate, stearyl acrylate, stearyl methacrylate, lauryl acrylate, lauryl methacrylate, monomethyl maleate, monoethyl maleate, diethyl maleate, monomethyl fumarate, glycidyl acrylate, glycidyl methacrylate and the like; and the like can be mentioned. Of these, alkyl (meth)acrylates are preferable, and ethyl acrylate is particularly preferable.

Specific preferable examples of ethylene copolymer or a metal salt (ionomer) thereof include ethylene-acrylic acid copolymer, ethylene-methacrylic acid copolymer, ethylene-ethyl acrylate copolymer, ethylene-acrylic acid-ethyl acrylate copolymer, ethylene-vinyl acetate copolymer, ethylene-vinyl acetate-ethyl acrylate copolymer, ethylene-glycidyl methacrylate copolymer, ethylene-glycidyl methacrylate-ethyl acrylate copolymer and metal salts (ionomers) thereof and the like can be mentioned, which are used alone or two or more kinds thereof are used.

The amount of an olefin polymer having a carbonylic oxygen atom in a molecular skeleton is generally 10-70 % by weight, preferably 15-50 % by weight, more preferably 20-40 % by weight, relative to the whole weight of the polymer components constituting a substrate for adhesive tape. When the amount of an olefin polymer having a carbonylic oxygen atom in a molecular skeleton is smaller than this range, sufficient strength cannot be afforded, and when its amount is higher, sufficient resistance to thermal deformation at 100°C cannot be achieved.

As the polymer component other than the olefin polymer having a carbonylic oxygen atom in a molecular skeleton, a resin having a melting point of not less than 100°C is desirable to meet the resistance to thermal deformation. In the absence of a polymer having a melting point of at least 100°C in the entire polymer components, resistance to thermal deformation at 100°C cannot be achieved. As such polymer, a resin containing an olefin resin as a major component is desirable to achieve flexibility comparable to that of a PVC tape. For example, polyolefin resins comprising homopolymer such as polyethylene and polypropylene, polymer alloys containing an ethylene component and a propylene component and the like are preferable.

The constitution (form) of the polymer alloys containing an ethylene component and a propylene component is not particularly limited and, for example, various constitutions (forms) such as (1) polymer blends (physical mixtures) wherein two or more kinds of polymers are physically mixed, (2) block copolymers and graft copolymers wherein two or more kinds of polymers are bonded by a covalent bond, (3) IPN (Interpenetrating Polymer Network) structures wherein two or more kinds of polymers are entangled without bonding with each other by a covalent bond and the like are acceptable. In addition, the polymer alloy does not have to be necessarily uniform in composition (may have a distribution), and may be a polymer alloy wherein two or more kinds of polymers are compatibilized (compatible polymer alloy), or a polymer alloy wherein two or more kinds of polymers are incompatible to form a phase separation structure (incompatible polymer alloy).

The substrate for the adhesive tape of the present invention further contains a salicylic acid compound. The addition of a salicylic acid compound can further increase strength at break, thereby improving the physical properties of the substrate for the adhesive tape of the present invention to reach the physical properties of a PVC tape. While the detail of the mechanism of high strength is unknown, the present inventors postulate that a salicylic acid compound adsorbed to the surface of an inorganometallic compound has some interaction with an olefin polymer having a carbonylic oxygen atom in a molecular skeleton and affords higher strength.

Since a salicylic acid compound adsorbs metallic ion impurity in an inorganometallic compound and enhances the effect of antioxidants (heavy metal inactivator), it simultaneously provides the effects of increasing the strength of a substrate and prolonging the heat resistance. In the present invention, therefore, an olefin polymer having a carbonylic oxygen atom in a molecular skeleton, an inorganometallic compound surface-treated with a silane coupling agent and a salicylic acid compound, or an olefin polymer having a carbonylic oxygen atom in a molecular skeleton, a metal hydroxide surface-treated with a silane coupling agent and a salicylic acid compound are the essential constituting materials.

As the salicylic acid compound, a reaction product of salicylic acid and hydrazine can be mentioned. Specifically, N-salicylal-N'-salicyloylhydrazine, N,N'-bis(salicyloyl)hydrazine, 3-salicyloylamino-1,2,4-triazole, N,N'-bis(salicyloyl) oxalic acid dihydrazide, N,N'-bis(salicyloyl)oxalyldihydrazide, N,N'-bis(salicyloyl)thiopropionyldihydrazide, N,N'-bis(salicyloyl)dihydrazide, decamethylenedicarboxylic acid disalicyloylhydrazide and a mixture thereof and the like can be mentioned.

The amount of the salicylic acid compound to be added is 0.05-10.0 parts by weight, preferably 0.1-5.0 parts by weight, more preferably 0.2-2.0 parts by weight, relative to 100 parts by weight of a polymer component in a substrate for adhesive tape. When it is less than 0.05 parts by weight, the effect of enhancing the strength at break is void and the effect of prolonging the heat resistance is smaller. Addition in an amount exceeding 10.0 parts by weight does not provide an improving effect corresponding to the amount added, and the amount of bleeding on the surface of a substrate for adhesive tape increases, which may cause an adverse influence on other properties. In addition, contamination of the surface of a metal roll may occur during film forming process.

The silane coupling agent is a silane compound having a structure wherein an organic functional group having affinity or reactivity for an organic resin is chemically bonded to a hydrolyzable silyl group having affinity or reactivity for an inorganic material. As the hydrolyzable group of a silane coupling agent, alkoxy group, acetoxy group and the like can be mentioned. As the alkoxy group, methoxy group and ethoxy group are conventionally used. As the organic functional group, amino group, methacryl group, vinyl group, epoxy group, mercapto group and the like are conventionally used, and amino group is most superior in view of the effect of eliminating the yield point and achieving high strength.

Specific examples of amino silane coupling agent include γ-aminopropyltrimethoxysilane, γ-aminopropyltriethoxysilane, N-phenyl-γ-aminopropyltrimethoxysilane, N-β-(aminoethyl)-γ-aminopropyltrimethoxysilane, N-β-(aminoethyl)-γ-aminopropyltriethoxysilane, N-phenyl-γ-aminopropyltriethoxysilane and the like can be mentioned. One or more kinds of these may be used in combination.

Here, in the present invention, the desired flame-retardancy is determined with oxygen index of not less than 24 as an index, which is generally considered a flame-retardance level of self-extinction. This matches with the flame-retardance level of PVC tapes used for general electric insulation use and binding use. Moreover, the present invention can deal with the requirement for high flame-retardancy and, as long as the amounts of the materials to be added are within the below-mentioned ranges, flame-retardancy can be further imparted while maintaining the properties such as winding workability, flexibility and the like, of the levels comparable to those of PVC tape.

When a metal hydroxide surface-treated with a silane coupling agent is added, the desired flame-retardancy can be imparted to an adhesive tape even in the absence of a flame-retarder or a flame-retardant auxiliary. As the metal hydroxide, metal hydroxide having flame-retardancy, such as aluminum hydroxide, magnesium hydroxide, zirconium hydroxide, calcium hydroxide, barium hydroxide and the like can be mentioned. The amount of the metal hydroxide surface-treated with a silane coupling agent is 80-200 parts by weight, preferably 90-180 parts by weight, more preferably 100-160 parts by weight, relative to 100 parts by weight of a polymer component constituting a substrate for adhesive tape. When it is less than 80 parts by weight, the desired flame-retardancy cannot be achieved and when it is greater than 200 parts by weight, flexibility and strength at break are degraded.

The adhesive tape of the present invention comprises a substrate for adhesive tape, which basically comprises given amounts of an olefin polymer having a carbonylic oxygen atom in a molecular skeleton, a metal hydroxide surface-treated with a silane coupling agent and a salicylic acid compound. As a result, the adhesive tape has an oxygen index of not less than 24, is free of a yield point, and shows bind workability of the same level as in PVC tapes.

The substrate for the adhesive tape of the present invention may contain, as necessary, amine age resisters and antioxidants, quinoline age resisters and antioxidants, hydroquinone age resisters and antioxidants, phenol age resisters and antioxidants, phosphorus age resisters and antioxidants, phosphite age resisters and antioxidants, benzophenone UV absorbers, benzotriazole UV absorbers, hindered amine UV absorbers and the like, fatty acid amides (e.g., amides such as fatty acid monoamides, unsaturated fatty acid amides and the like; substituted amides, methylolamides), fatty acid ester amide, lubricants such as polyethylene wax etc., plasticizers and the like. These are kneaded with the essential constituting materials, i.e., an olefin polymer, an inorganometallic compound, a salicylic acid compound and the like, and subjected to film forming as a mixture.

While the film forming method of a substrate for adhesive tape is not particularly limited, a method wherein the starting materials are mixed in a suitable mixing device such as Banbury mixer, press kneader, mixing roll, extruder and the like, and the mixture is formed into a film by a known film forming method such as compression-shaping, extrusion forming, calender molding, injection molding and the like can be mentioned. While the thickness of the substrate for adhesive tape varies depending on the use of an adhesive tape, it is generally 0.01-1 mm, preferably 0.05-0.5 mm.

While it is possible to apply a crosslinking treatment during the forming process by applying, after forming a film, ionizing radiation of the substrate for the adhesive tape of the present invention with electron beam, β-ray, γ-ray and the like, or adding a crosslinking agent such as organic peroxide etc. or a crosslinking auxiliary to a resin composition constituting a substrate for adhesive tape, one free of crosslinking treatment is preferable from the economical aspects.

The adhesive tape of the present invention is made by forming an adhesive layer on at least one surface of the aforementioned substrate for adhesive tape. As the adhesive for forming an adhesive layer, any existing adhesive such as rubber adhesives, hot melt adhesives, acrylic adhesives, emulsion adhesives and the like can be used. As the base polymer for rubber adhesives and hot melt adhesives, natural rubber, reclaimed rubber, silicone rubber, isoprene rubber, styrene butadiene rubber, polyisoprene, NBR, styrene-isoprene copolymer, styrene-isoprene-butadiene copolymer and the like are preferable.

As a tackifier to be used for an adhesive, for example, rosin tackifiers, terpene tackifiers, aliphatic petroleum hydrocarbon ($C_5$) tackifiers, aliphatic petroleum hydrocarbon ($C_9$) tackifiers, hydrogenated compounds and the like can be mentioned. The adhesive may contain additives such as oil, wax, antioxidant and the like, which are generally added to an adhesive of an adhesive tape.

Of the above-mentioned adhesives, acrylic adhesive is preferable, and as the acrylic adhesive, a homopolymer of (meth)acrylate and a copolymer with a copolymerizable monomer can be mentioned. As the (meth)acrylate and copolymerizable monomer, alkyl (meth)acryiate (e.g., methyl ester, ethyl ester, butyl ester, 2-ethylhexyl ester, octyl ester etc.), glycidyl (meth)acrylate, (meth)acrylic acid, itaconic acid, maleic anhydride, (meth)acrylic amide, (meth)acrylic acid N-hydroxyamide, alkylaminoalkyl (meth)acrylate (e.g., dimethylaminoethyl methacrylate, t-butylaminoethyl methacrylate etc.), vinyl acetate, styrene, acrylonitrile and the like can be mentioned. Of these, as the main monomer, alkyl acrylate whose homopolymer generally has a glass transition temperature of not more than -50°C is preferable.

As an application method of an adhesive, conventionally known methods, such as cast method, roll coater method, reverse coater method, doctor blade method and the like can be employed. The thickness of the adhesive layer is generally about 10-50 μm, preferably about 15-40 μm.

**Examples**

While the present invention is further explained in the following by referring to Examples, which are not to be construed as limitative.

The constituting materials used for Examples and Comparative Examples are shown in the following.

1) As "an olefin polymer having a carbonylic oxygen atom in a molecular skeleton" (hereinafter to be indicated as "component A"), the following materials were used for evaluation.

A1: ethylene-vinyl acetate copolymer (EVA), melting point: 72°C [trade name: EVAFLEX EV 270, manufactured by DU PONT-MITSUI POLYCHEMICALS]
A2: ethylene-ethyl acrylate copolymer (EEA), melting point: 79°C [trade name: EVAFLEX A-714, manufactured by DU PONT-MITSUI POLYCHEMICALS]

2) As the "olefin polymer other than component A" (hereinafter to be indicated as "component B"), the following materials were used for evaluation.

B1: low density polyethylene (LDPE), melting point: 110°C [trade name: SUMIKATHENE G 201, manufactured by SUMITOMO CHEMICAL Co., Ltd.]
B2: PP elastomer, melting point: 142°C [trade name: ADFREX Q100F, manufactured by SUNALLOMER LTD.]

3) As the inorganometallic compound (hereinafter to be indicated as "component C"), the following materials were used for evaluation.
Since the influence of an inorganometallic compound on life of heat resistance is markedly high, the inorganometallic compounds used here were of the same kind of clay or magnesium hydroxide to clarify the effect on the life of heat resistance.

C1: Sintered clay without surface treatment (average particle size 0.8 μm)
C2: Sintered clay (average particle size 0.8 μm) subjected to surface treatment with γ-aminopropyltriethoxysilane in an amount theoretically sufficient to cover the surface by 100% according to a wet method.
C3: magnesium hydroxide without surface treatment (average particle size 0.8 μm).
C4: magnesium hydroxide (average particle size 0.8 μm) subjected to surface treatment with γ-aminopropyltriethoxysilane in an amount theoretically sufficient to cover the surface by 100% according to a wet method.

4) As the salicylic acid compound (hereinafter to be indicated as "component D"), the following materials were used for evaluation.

D1: 3-(N-salicyloyl)amino-1,2,4-triazole
D2: decamethylenedicarboxylic acid disalicyloylhydrazide

5) As the antioxidant (hereinafter to be indicated as component E), the following materials were used for evaluation. Since the influence of antioxidants on the life of heat resistance is markedly high, the same amount of the following materials was used.

E1: pentaerythritol tetrakis[3-(3,5-di-tert-butyl-4-hydroxyphenyl)propionate]
E2: tris(2,4-di-tert-butylphenyl)phosphite

6) As the flame-retarder and flame-retardant auxiliary (hereinafter to be indicated as component F), the following materials were used for evaluation.

F1: ethane-1,2-bis(pentabromophenyl)
F2: antimony trioxide

As component A, component B, component C, component D, component E and component F, the materials shown in the following Tables 1 and 2 were added in the amounts shown therein, and substrates for adhesive tape and adhesive tapes were manufactured by the following production method.

[Production method of substrate for adhesive tape and adhesive tape]

Respective materials to be added shown in the following Tables 1 and 2 were kneaded in a pressure kneader press kneader to give a mixture. The mixture was formed with a calendering machine to give a 0.15 mm thick film as a substrate for adhesive tape. One surface of the substrate for adhesive tape was subjected to a corona discharge treatment and acrylic adhesive was applied (thickness 0.030 mm) to give adhesive tapes of Examples 1-7 and Comparative Examples 1-5.

Table 1

| Component | | Ex.1 * | Ex.2 | Ex.3 * | Ex.4 | Ex.5 | Ex.6 * | Ex.7 * |
|---|---|---|---|---|---|---|---|---|
| Component A | A-1 | - | 50 | 70 | 12 | 70 | 40 | 70 |
| | A-2 | 40 | - | - | - | - | - | - |
| Component B | B-1 | 60 | 50 | 30 | - | 30 | - | - |
| | B-2 | - | - | - | 88 | - | 60 | 30 |
| Component C | C-1 | - | - | - | - | - | - | - |
| | C-2 | - | - | - | - | - | 50 | 90 |
| | C-3 | - | - | - | - | - | - | - |
| | C-4 | 70 | 80 | 20 | 96 | 180 | - | - |
| Component D | D-1 | - | - | 0.2 | 1.2 | 9.0 | - | 0.5 |
| | D-2 | 1.0 | 0.5 | - | - | - | 1.0 | - |
| Component E | E-1 | 0.2 | 0.2 | 0.2 | 0:2 | 0.2 | 0.2 | 0.2 |
| | E-2 | 0.2 | 0.2 | 0.2 | 0.2 | 0.2 | 0.2 | 0.2 |
| Component F | F-1 | 30 | 20 | 40 | - | - | 40 | 30 |
| | F-2 | - | 10 | 20 | - | - | 20 | 15 |
| * not according to the invention | | | | | | | | |

Table 2

| Component | | Com. Ex. 1 | Com. Ex. 2 | Com. Ex. 3 | Com. Ex. 4 | Com. Ex. 5 |
|---|---|---|---|---|---|---|
| Component A | A-1 | - | 30 | - | 70 | 40 |
| | A-2 | 60 | - | 50 | - | - |
| Component B | B-1 | 40 | 70 | - | 30 | - |
| | B-2 | - | - | 50 | - | 60 |
| Component C | C-1 | - | - | - | - | 50 |
| | C-2 | - | - | 20 | - | - |
| | C-3 | 100 | - | - | - | - |
| | C-4 | - | 70 | - | 180 | - |

(continued)

| Component | | Com. Ex. 1 | Com. Ex. 2 | Com. Ex. 3 | Com. Ex. 4 | Com. Ex. 5 |
|---|---|---|---|---|---|---|
| Component D | D-1 | - | 0.5 | 0.5 | - | - |
| | D-2 | 1.0 | - | - | - | 1.0 |
| Component E | E-1 | 0.2 | 0.2 | 0.2 | 0.2 | 0.2 |
| | E-2 | 0.2 | 0.2 | 0.2 | 0.2 | 0.2 |
| Component F | F-1 | - | - | 120 | - | 40 |
| | F-2 | - | - | - | - | 20 |

[Evaluation test]

Adhesive tapes obtained in Examples 1-7 and Comparative Examples 1-5 were cut in 19 mm, which is the standard width of a PVC tape to give test samples which were subjected to various tests shown below. In Comparative Example 6, a commercially available PVC tape (trade name No. 223S, manufactured by NITTO DENKO CORPORATION) was used for the test. The evaluation results are shown in Tables 3 and 4.

(1) Tensile test

A test piece taken from an adhesive tape was stretched under an atmosphere of 23°C, 50% RH using a tensile tester (AG-20KNG, manufactured by SHIMADZU CORPORATION) at a distance between chucks 50 mm, tensile rate 300 mm/min, and initial elastic modulus, strength at break and elongation at break were measured. In addition, the presence or absence of the yield point was confirmed in the graph of the measurement output. The above-mentioned measurement was performed after preservation for at least 48 hr after manufacture of the adhesive tapes, under an atmosphere of 23°C, 50% RH.

<Evaluation criteria>

initial elastic modulus: Those having 10-150 MPa passed.
yield point: Those that always showed increased strength relative to elongation passed.
strength at break: Those having 6-30 MPa passed.
elongation at break: Those showing 80-600% passed.

(2) Heat deformation test

As shown in Fig. 1(a), adhesive tape T was wound around the outer circumference of a conductor round rod 1 having a diameter (d) of 2 mm to a thickness (t) equal to 0.8 mm to give a test form 10. The outer diameter (Do) of the test form 10 at a normal temperature was measured with a dial gauge defined in JIS B7503, a vernier calipers defined in JIS B7507 or a measurement tool having the measurement precision equivalent to those of the above, and the test form 10 was processed to make the total thickness thereof $3.6 \pm 0.5$ mm. The test form 10 was placed in a tester heated to the predetermined temperature ($100.0 \pm 1.0$°C) and heated for 60 min. As shown in Fig. 1(b), the test form 10 was disposed between a pressurizing plate 2 with a retainer 2a (diameter $9.5 \pm 0.2$ mm) and a parallel board 3 of the test device and pressurized by applying a predetermined weight (4.90 N) to the plane surface of the board from the perpendicular direction. Then, the test form was left standing at a predetermined temperature ($100.0 \pm 1.0$°C) for 60 min and the outer diameter ($D_1$) of the test form was measured as it was. The thickness ($t_0$) of the tape before heating, and the thickness ($t_1$) of the tape after heating were calculated from the following formula (I). From the following formula (II), a decrease rate (heat deformation rate) (X) was then calculated from the tape thickness before heating to that after heating.

<Evaluation criteria>

Those showing a decrease rate (heat deformation rate) (X) within 65% passed, and those exceeding 65% failed.

$$t = (D-d)/2 \quad (I)$$

wherein D is the outer diameter of the test form and d is a diameter of the round rod.

$$X(\%) = ((t_0 - t_1)/t_0) \times 100 \quad (II)$$

wherein $t_0$ is the thickness (mm) before heating and $t_1$ is the thickness (mm) after heating.

(3) Measurement of life of heat resistance

An adhesive tape test piece (150 mm) was taken, and the adhesive surface of the adhesive tape test piece was adhered to the release-treated surface of a polyester film after a release treatment. The test piece was hung in a gear oven without a load applied thereto, and the life of heat resistance was evaluated under the following conditions. The life of heat resistance of the test piece was determined when the elongation of the test piece became not more than 50%.
Temperature in the layer: 140°C
Air rate: 0.5 m/sec.
Exhaust dumper opening rate: 50%

(4) Flame-retardancy test (oxygen index)

While many methods are available for evaluation of flame-retardancy, for evaluation based on oxygen index that can be expressed by numerical values, a test was performed according to JIS K 7201-2.
Since the value of oxygen index is influenced by the thickness of the sample to be measured, the following shape of test piece was employed for a measurement affording good reproducibility of flame-retardancy of an adhesive tape.
The type of test piece was IV (length 80-150 mm, width 6.5±0.5 mm, thickness 3±0.25 mm), which was produced by superimposing adhesive tapes.

<Evaluation criteria>

Those showing an oxygen index of not less than 24 passed.

Table 3

| Evaluation item | unit | Ex.1* | Ex.2 | Ex.3* | Ex.4 | Ex.5 | Ex.6* | Ex.7* |
|---|---|---|---|---|---|---|---|---|
| initial elastic modulus | MPa | 72 | 66 | 68 | 100 | 106 | 73 | 102 |
| presence or absence of yield point | - | none | none | none | none | none | none | none |
| strength at break | MPa | 9.8 | 13.2 | 8.6 | 11.1 | 16.5 | 10.1 | 9.7 |
| elongation at break | % | 240 | 320 | 560 | 370 | 90 | 220 | 100 |
| Heat deformation rate | % | 40 | 46 | 59 | 23 | 62 | 45 | 60 |
| life of heat resistance | h | 1040 | 1010 | 880 | 1380 | 1280 | 640 | 600 |
| Flame-retardancy (oxygen index) | - | 27.0 | 28.0 | 24.5 | 24.0 | 32.0 | 29.0 | 26.0 |
| evaluation | | OK | OK | OK | OK | OK | OK | OK |
| * not according to the invention | | | | | | | | |

Table 4

| Evaluation item | unit | Com. Ex.1 | Com. Ex.2 | Com. Ex.3 | Com. Ex.4 | Com. Ex.5 | Com. Ex.6 |
|---|---|---|---|---|---|---|---|
| initial elastic modulus | MPa | 61 | 57 | 78 | 112 | 87 | 52 |

(continued)

| Evaluation item | unit | Com. Ex.1 | Com. Ex.2 | Com. Ex.3 | Com. Ex.4 | Com. Ex.5 | Com. Ex.6 |
|---|---|---|---|---|---|---|---|
| presence or absence of yield point | - | present | none | present | present | present | none |
| strength at break | MPa | 10.1 | 14.2 | 5.2 | 14.1 | 7.9 | 16.8 |
| elongation at break | % | 650 | 380 | 70 | 140 | 340 | 300 |
| Heat deformation rate | % | 51 | 34 | 58 | 62 | 44 | 50 |
| life of heat resistance | h | 1310 | 1320 | 620 | 920 | 630 | 620 |
| Flame-retardancy (oxygen index) | - | 24.5 | 23.0 | 30.5 | 32.0 | 29.0 | 27.5 |
| evaluation | | NG | NG | NG | NG | NG | OK |

Comparative Example 1 contained untreated metal hydrate as component C. While the flame-retardancy was of a self-extinction level (oxygen index of not less than 24), since the tape had a yield point and high elongation at break, it was not suitable for binding use.

Comparative Example 3 contained essential constituent materials, but was confirmed to have markedly degraded mechanical physical properties, which was due to the addition of excess component F.

In Example 5 and Comparative Example 4, difference in the effects due to the presence or absence of component D was examined. Addition of component D was confirmed to have improved strength at break and eliminated a yield point. In addition, the life of heat resistance was also improved.

From the foregoing results, it was confirmed that high flame-retardancy could be afforded even when given amounts of an olefin polymer having a carbonylic oxygen atom in a molecular skeleton, a metal hydroxide surface-treated with a silane coupling agent and a salicylic acid compound were added.

1. An adhesive tape comprising an adhesive layer on at least one surface of a substrate, wherein said substrate comprises an olefin polymer having a carbonylic oxygen atom in a molecular skeleton, an inorganometallic compound surface-treated with a silane coupling agent, a salicylic acid compound, and a flame-retarder, wherein
the content of said olefin polymer is 10-70 % by weight relative to the whole weight of the polymer components constituting the substrate,
the content of said inorganometallic compound surface-treated with a silane coupling agent is 10-100 parts by weight relative to 100 parts by weight of the polymer components constituting the substrate,
the content of said salicylic acid compound is 0.05-10.0 parts by weight relative to 100 parts by weight of the polymer components constituting the substrate, and
the content of said flame-retarder is 10-100 parts by weight relative to 100 parts by weight of the polymer components constituting the substrate.

2. The adhesive tape as above 1, which has an oxygen index of not less than 24.

3. The adhesive tape as above 1 or 2, wherein said inorganometallic compound is a metal hydroxide.

4. The adhesive tape of any as above 1 to 3, wherein said substrate is free of a crosslinking treatment with ionizing radiation and/or a crosslinking agent.

5. The adhesive tape of any as above 1 to 4, which has a heat deformation rate at 100°C of not more than 65%.

6. An adhesive tape comprising an adhesive layer on at least one surface of a substrate, wherein said substrate comprises an olefin polymer having a carbonylic oxygen atom in a molecular skeleton, a metal hydroxide surface-treated with a silane coupling agent, and a salicylic acid compound, wherein
the content of said olefin polymer is 10-70 % by weight relative to the whole weight of the polymer components constituting the substrate,
the content of said metal hydroxide surface-treated with a silane coupling agent is 80-200 parts by weight relative to 100 parts by weight of the polymer components constituting the substrate, and

the content of said salicylic acid compound is 0.05-10.0 parts by weight relative to 100 parts by weight of the polymer components constituting the substrate.

7. The adhesive tape as above 6, which has an oxygen index of not less than 24.

8. The adhesive tape as above 6 or 7, wherein said substrate is free of a crosslinking treatment with ionizing radiation and/or a crosslinking agent.

9. The adhesive tape of any as above 6 to 8, wherein the heat deformation rate of the adhesive tape at 100°C is not more than 65%.

10. A substrate for an adhesive tape, which comprises an olefin polymer having a carbonylic oxygen atom in a molecular skeleton, an inorganometallic compound surface-treated with a silane coupling agent, a salicylic acid compound, and a flame-retarder, wherein the content of said olefin polymer is 10-70 % by weight relative to the whole weight of the polymer components constituting the substrate, the content of said inorganometallic compound surface-treated with a silane coupling agent is 10-100 parts by weight relative to 100 parts by weight of the polymer components constituting the substrate, the content of said salicylic acid compound is 0.05-10.0 parts by weight relative to 100 parts by weight of the polymer components constituting the substrate, and the content of said flame-retarder is 10-100 parts by weight relative to 100 parts by weight of the polymer components constituting the substrate.

11. The substrate as above 10, which has an oxygen index of not less than 24.

12. The substrate as above 10 or 11, which is free of a crosslinking treatment with ionizing radiation and/or a crosslinking agent.

13. A substrate for an adhesive tape, which comprises an olefin polymer having a carbonylic oxygen atom in a molecular skeleton, an metallic hydroxide surface-treated with a silane coupling agent, and a salicylic acid compound, wherein the content of said olefin polymer is 10-70 % by weight relative to the whole weight of the polymer components constituting the substrate, the content of said metallic hydroxide surface-treated with a silane coupling agent is 80-200 parts by weight relative to 100 parts by weight of the polymer components constituting the substrate, and the content of said salicylic acid compound is 0.05-10.0 parts by weight relative to 100 parts by weight of the polymer components constituting the substrate.

14. The substrate as above 13, which has an oxygen index of not less than 24.

15. The substrate as above 13 or 14, which is free of a crosslinking treatment with ionizing radiation and/or a crosslinking agent.

**Claims**

1. A substrate for an adhesive tape, which comprises an olefin polymer having a carbonylic oxygen atom in a molecular skeleton, a metallic hydroxide surface-treated with a silane coupling agent, and a salicylic acid compound, wherein the content of said olefin polymer is 10-70 % by weight relative to the whole weight of the polymer components constituting the substrate, the content of said metallic hydroxide surface-treated with a silane coupling agent is 80-200 parts by weight relative to 100 parts by weight of the polymer components constituting the substrate, and the content of said salicylic acid compound is 0.05-10.0 parts by weight relative to 100 parts by weight of the polymer components constituting the substrate.

2. The substrate of claim 1, which has an oxygen index of not less than 24.

3. The substrate of claim 1 or 2, which is free of a crosslinking treatment with ionizing radiation and/or a crosslinking agent.

4. An adhesive tape comprising an adhesive layer on at least one surface of the substrate as defined in any of claims 1, 2 or 3.

5. The adhesive tape of claim 4, wherein the heat deformation rate of the adhesive tape at 100 °C is not more than 65%.

**Patentansprüche**

1. Substrat für ein Klebeband, das ein Olefinpolymer mit einem carbonylischen Sauerstoffatom im Molekülgerüst, ein mit einem Silan-Kopplungsmittel oberflächenbehandeltes Metallhydroxid und eine Salicylsäureverbindung umfasst, wobei:

   der Gehalt des Olefinpolymers 10-70 Gew.-% beträgt, relativ zum Gesamtgewicht der Polymerkomponenten, die das Substrat bilden;
   der Gehalt des mit einem Silan-Kopplungsmittel oberflächenbehandelten Metallhydroxids 80-200 Gewichtsteile beträgt, relativ zu 100 Gewichtsteilen der Polymerkomponenten, die das Substrat bilden; und
   der Gehalt der Salicylsäureverbindung 0,05-10,0 Gewichtsteile beträgt, relativ zu 100 Gewichtsteilen der Polymerkomponenten, die das Substrat bilden.

2. Substrat gemäß Anspruch 1, das einen Sauerstoffindex von nicht weniger als 24 hat.

3. Substrat gemäß Anspruch 1 oder 2, das keine Vernetzungsbehandlung mit ionisierender Strahlung und/oder einem Vernetzungsmittel erfahren hat.

4. Klebeband, das eine Klebstoffschicht auf wenigstens einer Oberfläche des Substrats gemäß einem der Ansprüche 1, 2 oder 3 umfasst.

5. Klebeband gemäß Anspruch 4, wobei die Warmverformungsrate des Klebebands bei 100 °C nicht größer als 65% ist.

**Revendications**

1. Substrat pour un ruban adhésif qui comprend un polymère oléfinique ayant un atome d'oxygène carbonylique dans un squelette moléculaire, un hydroxyde métallique traité en surface avec un agent de couplage au silane, et un composé acide salicylique, dans lequel
   la teneur en ledit polymère oléfinique est de 10 à 70 % en poids par rapport au poids total des composants polymères constituant le substrat,
   la teneur en ledit hydroxyde métallique traité en surface avec un agent de couplage au silane est de 80 à 200 parties en poids par rapport à 100 parties en poids des composants polymères constituant le substrat, et
   la teneur en ledit composé acide salicylique est de 0, 05 à 10,0 parties en poids par rapport à 100 parties en poids des composants polymères constituant le substrat.

2. Substrat selon la revendication 1, qui a un indice d'oxygène qui n'est pas inférieur à 24.

3. Substrat selon la revendication 1 ou 2, qui est exempt de traitement de réticulation avec un rayonnement ionisant et/ou un agent de réticulation.

4. Ruban adhésif comprenant une couche adhésive sur au moins une surface du substrat tel que défini selon l'une quelconque des revendications 1, 2 et 3.

5. Ruban adhésif selon la revendication 4, dans laquelle le taux de déformation à la chaleur du ruban adhésif à 100°C n'est pas supérieur à 65 %.

# FIG. 1

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003178628 A
- JP 2004115714 A
- JP 2004 A
- JP 115714 A

- US 4238587 A
- US 4639935 A
- JP 07061126 A
- WO 9705206 A